# EUROPEAN PATENT SPECIFICATION

(11) **EP 4 600 812 B1**
(45) Date of publication and mention of the grant of the patent: **05.08.2026**
(21) Application number: 24201867.9
(22) Date of filing: 23.09.2024
(51) Int. Cl.: G07C 5/08, G06F 8/65, H04L 67/12, H04L 67/00

(54) **SHARED STORAGE DEVICE AND AUTOMOTIVE DEVICE INCLUDING THE SAME**
GEMEINSAM GENUTZTE SPEICHERVORRICHTUNG UND KRAFTFAHRZEUGVORRICHTUNG, DIE DIESES ENTHÄLT
DISPOSITIF DE STOCKAGE PARTAGÉ ET DISPOSITIF AUTOMOBILE LE COMPRENANT

(30) Priority: 07.02.2024 KR 20240019202
(43) Date of publication of application: 13.08.2025
(73) Proprietor: Samsung Electronics Co., Ltd, Suwon-si, Gyeonggi-do 16677 (KR)
(72) Inventor: LEE, Jin Wook, Suwon-si, Gyeonggi-do 16677 (KR)
(74) Representative: Kuhnen & Wacker Patent- und Rechtsanwaltsbüro PartG mbB

(56) References cited:
- US-A1- 2022 326 936

## Description

### BACKGROUND

The present disclosure relates to a shared storage device mounted on an automotive device.

With the rapid development of semiconductor devices, autonomous driving vehicle technology using semiconductor devices is being developed.

Autonomous vehicles are evolving from a central architecture that includes a single electronic control unit (ECU), to a zone-based architecture that includes a central ECU and multiple zonal ECUs. In the zone-based architecture, the zonal ECUs control nodes that can form network zones within a vehicle, and the central ECU controls the zonal ECUs.

US 2022/326936 A1 discloses an updating method for in-vehicle software for updating a software included in an in-vehicle system having an uppermost control unit, a zone control unit connected to a downstream side of the uppermost control unit, and a plurality of lower control units connected to a downstream side of the zone control unit, the updating method comprising securing one area in a memory on the zone control unit, the one area being capable of storing one update data for updating the zone control unit and the lower control units which are an update object; repeatedly checking whether the update data exists in a predetermined software supply source; downloading the update data from the software supply source to store the update data in the one area, when the update data satisfying one download condition exists in the software supply source; and preferentially selecting the one update data with the highest priority from a plurality of update data to execute the downloading, when the plurality of update data satisfying the one download condition exist concurrently in the software supply source.

### SUMMARY

The invention relates to a shared storage device that can quickly and effectively load code data to a corresponding electronic control unit (ECU) through a system memory during runtime. It is another aspect to provide an automotive device including the shared storage device and thereby having improved operational performance using limited resources.

One or more embodiments are set out in the appended claims.

### BRIEF DESCRIPTION OF THE DRAWINGS

The above and other aspects will become more apparent by describing in detail exemplary embodiments thereof with reference to the attached drawings, in which:
FIG. 1 is a conceptual diagram for explaining an automotive device according to some embodiments;
FIG. 2 is a block diagram of the automotive device according to some embodiments;
FIG. 3 is a conceptual diagram for explaining ECUs of a central/zone-based architecture according to some embodiments;
FIG. 4 is a conceptual diagram for explaining the operation of a central ECU of the central/zone-based architecture of FIG. 3, according to some embodiments;
FIG. 5 is a block diagram of a nonvolatile memory controller of the automotive device of FIG. 2, according to some embodiments;
FIG. 6 is a block diagram of a regional ECU of the automotive device of FIG. 2, according to some embodiments;
FIG. 7 is a block diagram of an input/output memory management unit (IOMMU) of the automotive device of FIG. 2, according to some embodiments;
FIGS. 8 and 9 are flowcharts illustrating an operation of the automotive device according to some embodiments;
FIG. 10 is a block diagram for explaining the operation of the automotive device according to some embodiments;
FIG. 11 illustrates a segment table according to some embodiments;
FIG. 12 is a schematic view for explaining an access frequency of code segments according to some embodiments;
FIG. 13 is a schematic diagram for explaining an inheritance of addresses of code segments according to some embodiments;
FIG. 14 is a flowchart illustrating an operation of the automotive device according to some embodiments;
FIG. 15 is a conceptual diagram illustrating an operation of the automotive device according to some embodiments;
FIG. 16 is a flowchart illustrating an operation of the automotive device according to some embodiments;
FIG. 17 is a conceptual diagram illustrating the operation of the automotive device according to some embodiments;
FIG. 18 is a conceptual view explaining an operation of the automotive device according to some embodiments;
FIG. 19 is a flowchart illustrating an operation of the automotive device according to some embodiments;
FIG. 20 is a flowchart illustrating an operation of the automotive device according to some embodiments.

### DETAILED DESCRIPTION

In a related art vehicle architecture, each ECU includes a separate nonvolatile memory device. However, as the ECUs of autonomous vehicles have evolved into central and zone-based architectures, the ECUs of both the central and zone-based architectures now operate by sharing nonvolatile memory devices. Currently, discussions are underway regarding methods for connection and operation between the ECUs of the central and zone-based architectures and shared nonvolatile memory (or storage) devices.

For example, in the zone-based architecture, each zonal ECU may add or modify functions through firmware updates, and for the efficiency and optimization of each zonal ECU's memory, code data may be read and executed from a shared nonvolatile memory device to each zonal ECU. Since the reading and execution of the code data need to be conducted during the runtime of each zonal ECU, the code loading time from the nonvolatile memory device has a significant impact on the performance of the autonomous vehicle.

The present disclosure relates to software stored on one or more of a plurality of computer-readable media that controls an automotive device 1 to drive a device or devices that implement various embodiments, and enables the automotive device 1 to interact with a human user (for example, a driver). The software includes, but is not limited to, a device driver, an operating system, a development tool, and/or application software. The computer-readable media include computer program products that perform either all processing performed in implementing the various embodiments or some of the processing (in a case where the processing is distributed). A computer code device of the present disclosure may be any interpretable or executable code mechanism including, but not limited to, scripts, interpretable programs, dynamic link libraries (DLLs), Java classes, and complete executable programs. Furthermore, for better performance, reliability, and/or cost, some of the processing may be distributed.

As used in this specification, the phrase "at least one of A, B, or C" includes within its scope "only A", "only B", "only C", "A and B", "B and C", "A and C", and "A, B, and C."

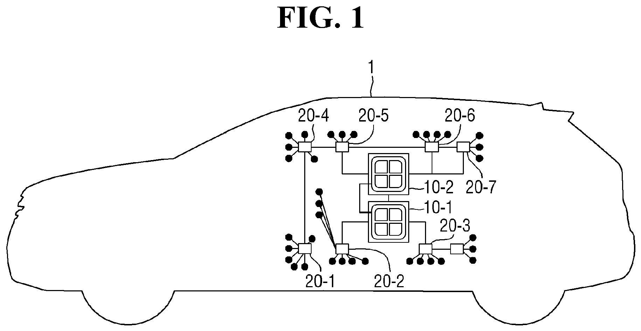

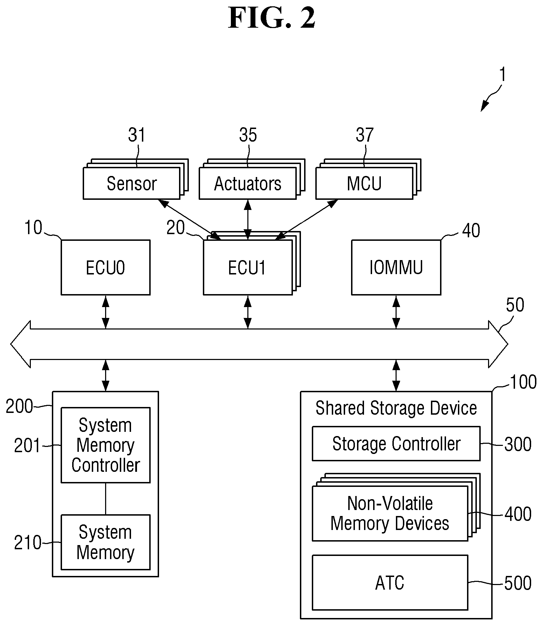

FIG. 1 is a conceptual diagram for explaining an automotive device according to some embodiments. FIG. 2 is a block diagram of the automotive device according to some embodiments.

Referring to FIGS. 1 and 2, an automotive device 1 includes a central architecture and a zone-based architecture. In some embodiments, the automotive device 1 includes central electronic control units (ECUs) 10-1 and 10-2 (ECU0) and regional ECUs 20-1 through 20-6 (ECU1).

The central ECUs 10-1 and 10-2 may perform overall control to ensure that each component within the automotive device 1 functions normally. The regional ECUs 20-1 through 20-6 may perform different tasks, for example, to control a designated zone that is designated for the regional ECU or communicate with other non-designated zones, independent nodes, or a server.

For example, the regional ECU 20-1 may control nodes in a front-right-door zone, and the regional ECU 20-2 may control nodes in a front-left-door zone. The nodes in each zone may include, for example, controllers such as LiDAR sensors, distance sensors, image sensors, actuators, motor control units (MCU), etc. The central ECU 10-1 sends main control signals to the regional ECUs 20-1 and 20-2 based on status signals received from the regional ECUs 20-1 and 20-2. The regional ECUs 20-1 and 20-2 may generate individual control signals based on the main control signal from the central ECU 10-1 to drive the controllers.

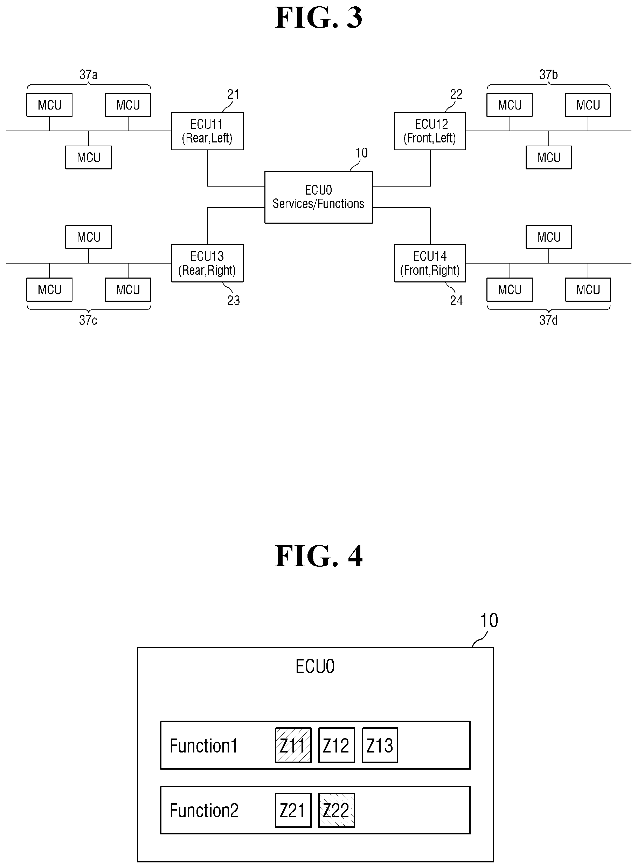

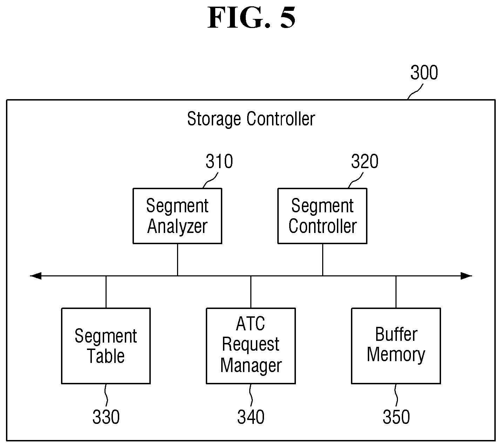

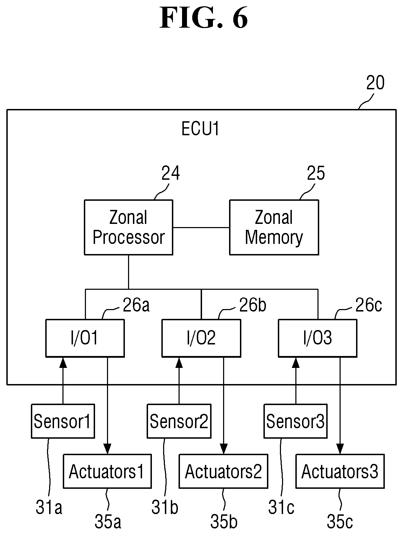

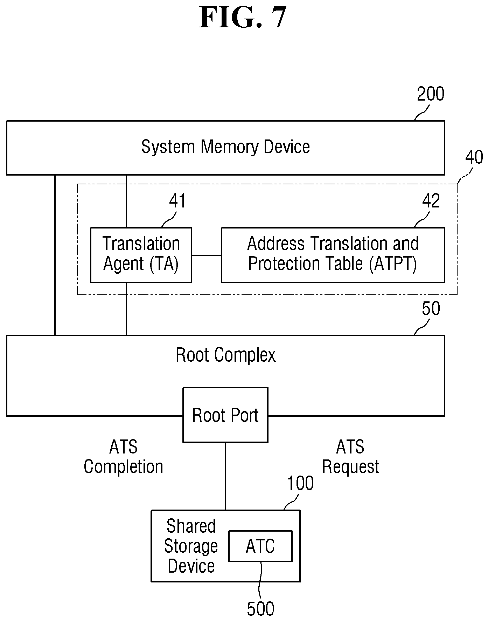

FIG. 3 is a conceptual diagram for explaining ECUs of a central/zone-based architecture according to some embodiments. FIG. 4 is a conceptual diagram for explaining the operation of a central ECU of the central/zone-based architecture of FIG. 3, according to some embodiments. FIG. 5 is a block diagram of a nonvolatile memory controller of the automotive device of FIG. 2, according to some embodiments. FIG. 6 is a block diagram of a first ECU of the automotive device of FIG. 2, according to some embodiments. FIG. 7 is a block diagram of an input/output memory management unit (IOMMU) of the automotive device of FIG. 2, according to some embodiments.

Referring to FIGS. 2 through 7, the automotive device 1 includes a central ECU (ECU0) 10 and first ECUs (ECU1) 20-1 through 20-6 (hereinafter the regional ECUs 20), which are connected to a system bus 50, a plurality of nodes (e.g., sensors 31, actuators 35, and micro control units (MCUs) 37), which are connected to the regional ECUs 20, an input/output memory management unit (IOMMU) 40, a system memory device 200, and a shared storage device 100.

The central ECU (ECU0) 10 generally controls the regional ECUs (ECU1) 20 and other components of the automotive device 1. In some embodiments, the central ECU 10 may also be referred to as a central control unit, a central ECU, an autonomous driving stack, or an autonomous driving computer. For example, the central ECU 10 may process data collected through the nodes (e.g., the sensors 31, actuators 35, and MCUs 37) connected to the regional ECUs 20, perform driving control together with the regional ECUs 20, and communicate with an external system to handle real-time traffic information, cloud services, updates, etc. In some embodiments, the central ECU 10 may manage the safety systems of the automotive device 1, manage software updates, and/or perform self-diagnostic functions.

The regional ECUs (ECU1) 20 generally control nodes that are categorized by function, location, etc. The regional ECUs 20 may also be referred to as zone control units, zonal ECUs, or region control units, but embodiments are not limited thereto. The regional ECUs 20 detect an environment around the automotive device 1 and control an operation of the automotive device 1 through various sensors 31, actuators 35, and/or micro control units (MCUs) 37. The regional ECUs 20 transmit their status and zone control information to the central ECU 10 and may receive central control signals from the central ECU 10.

In some embodiments, the regional ECUs (ECU1) 20 may include sensor ECUs, control ECUs, communication ECUs, safety ECUs, power control ECUs, power ECUs, etc. For example, the sensor ECUs may be electrically connected to a plurality of sensors in one zone, receive sensing values from the sensors to extract environmental information, and transmit the extracted environmental information to the central ECU 10. For example, the power ECUs are electrically connected to a plurality of power elements in one zone, monitor the state of the power elements, inform the central ECU 10 of the results of the monitoring, and perform a zone power control operation on at least one of the power elements, either independently or under the control of the central ECU 10, based on the monitored state of the corresponding power element(s).

In some embodiments, as illustrated in FIG. 3, the regional ECUs 20 may include regional ECUs for different zones, i.e., a regional ECU 21 (ECU11) for a rear-left zone, a regional ECU 22 (ECU12) for a front-left zone, a regional ECU 23 (ECU13) for a rear-right zone, and a regional ECU 24 (ECU14) for a front-right zone. The regional ECUs 21, 22, 23, and 24 may include a plurality of MCU sets 37a, 37b, 37c, and 37d, respectively, which are electrically connected. Each of the MCU sets 37a, 37b, 37c, and 37d may include a plurality of MCUs, and each of the MCUs controls zone control elements connected thereto. For example, the regional ECU 21 may receive status information of control elements in a rear-left zone and operation control information of the MCU set 37a, and may control the operation of MCU set 37a either independently or under the control of the central ECU 10. While each of the MCU sets 37a, 37b, 37c, and 37d is illustrated in FIG. 3 as including three MCUs, this configuration is only an example and, in some embodiments, the MCU sets may have different numbers of ECUs and, in some embodiments, the number of MCUs may be greater than or less than three.

Referring to FIGS. 2 and 4, the central ECU (ECU0) 10 executes instruction code for performing a plurality of functions. In some embodiments, the instruction code, which is a main signal of the central ECU 10, may be associated with the functions performed by each of the regional ECUs 20. For example, it is assumed that code data for performing a first function is Function1 and code data for performing a second function is Function2, and that the first and second functions are performed by the regional ECUs 21 and 22, respectively.

The automotive device 1 uses one code data to perform at least one function in one central ECU 10 or regional ECU 20. For example, code data executed in each central ECU 10 or each regional ECU 20, which is an entire code for performing a function, may be divided into smaller code segments. For example, the code data for performing the first function may include a plurality of first code segments. The first code segments, which are functional segments, may vary in block size.

The code data Function1, which is the code data for the first function, may include three code segments Z11, Z12, and Z13, and the code data Function2, which is the code data for the second function, may include two code segments Z21 and Z22.

The central ECU 10 and/or the regional ECUs 20 may perform software updates to ensure stable operation and performance enhancement of the automotive device 1. Software updates for the ECU0 10 and/or the regional ECUs 20 may be conducted for improved algorithms, bug fixes, and/or the addition of new features. These software updates may be performed via an over-the-air (OTA) update or via a wired or wireless network at an official service center. Code data for updated software is stored in the shared storage device 100 either via an OTA update or via a wired or wireless network. The central ECU 10 and/or the regional ECUs 20 may then send a code update request to the shared storage device 100 during system reboot or during runtime of the automotive device 1. The shared storage device 100 reads code data corresponding to the code update request and loads the read code data into a system memory 210. The system memory 210 stores code segments of the loaded code data and transmits the code segments to the central ECU 10 and/or the regional ECUs 20. Each entity that sends a code request to the shared storage device 100, for example, the central ECU 10 or the regional ECUs 20, may be referred to as a host device.

Referring to FIGS. 2 and 6, the regional ECU (ECU1) 20 according to some embodiments may include a zonal processor 24, a zonal memory 25, and device input/output interfaces 26a, 26b, and 26c (I/O1, I/O2, and I/O3). The zonal processor 24 performs particular functions using data from the zonal memory 25. For example, by executing a transmitted code set that is stored in the zonal memory 25 from the system memory 210, the zonal processor 24 may perform a corresponding function.

The device input/output interfaces 26a, 26b, and 26c may be connected to corresponding sets of devices (e.g., sensors 31a through 31c and actuators 35a through 35c).

The system memory device 200 may include the system memory 210 and a system memory controller 201. The system memory 210 may be accessed through the system memory controller 201. The system memory controller 201 may be connected to the system bus 50 and may control access to the system memory 210 from other components of the automotive device 1. The system memory controller 201 may manage the operation of storing data (e.g., write data) from the system memory 210 in nonvolatile memory devices 400 or storing data (e.g., read data) from the nonvolatile memory devices 400 in the system memory 210. For example, the system memory controller 201 may control the operation of storing intermediate data generated during the operation of each central ECU 10 and/or each regional ECU 20 in the system memory 210 or reading intermediate data needed for the operation of each central ECU 10 and/or each regional ECU 20 from the system memory 210.

The system memory 210 may function as a buffer memory for temporarily storing data received from, or to be transmitted to, the shared storage device 100. The system memory 210 includes a volatile memory, such as a random-access memory (RAM) or another dynamic storage device (e.g., a dynamic RAM (DRAM), a static RAM (SRAM), or a synchronous DRAM (SDRAM). The system memory 210 includes a nonvolatile memory. The nonvolatile memory may be, for example, a read-only memory (ROM) or another static storage device (e.g., a programmable ROM (PROM), an erasable PROM (EPROM), or an electrically erasable PROM (EEPROM)).

In some embodiments, the system memory controller 201 and the system memory 210 may be implemented as separate semiconductor chips. In some embodiments, the system memory controller 201 and the system memory 210 may be integrated into the same semiconductor chip.

In some embodiments, the system bus 50 may be, for example, a Peripheral Component Interconnect (PCI) or PCI-Express (PCIe) bus, or a Nonvolatile Memory express (NVMe) over Fabrics (NVMe-oF) bus with network capabilities. In some embodiments, the system bus 50 may communicate through communication links other than PCIe that include, but are not limited to, Computing Express Link (CXL), Serial Attached SCSI (SAS), Serial ATA (SATA), and/or Cache Coherent Interconnect for Accelerators (CCIX). In some embodiments, as illustrated in FIG. 7, the system bus 50 may include an interface for connecting the components of the automotive device 1 to a network fabric and thus may be referred to as a root complex interface. The root complex interface 50 may include one or more root ports that may be used to connect the shared storage device 100 to the system memory device 200. That is, the shared storage device 100 may be connected to the system memory device 200 through the root complex interface 50.

The shared storage device 100 includes a storage controller 300 and a plurality of nonvolatile memory devices 400. The nonvolatile memory devices 400 is controlled by the storage controller 300.

The shared storage device 100 may include the plurality of nonvolatile memory devices 400 for storing data upon request from each central ECU 10 and/or each regional ECU 20. For example, each of the nonvolatile memory devices 400 may include at least one of a solid state drive (SSD), an embedded memory, or a removable external memory. If the nonvolatile memory devices 400 are SSDs, the shared storage device 100 may be a device that follows the NVMe standard.

If the nonvolatile memory devices 400 are embedded memories or external memories, the shared storage device 100 may be a device that follows a Universal Flash Storage (UFS) standard or embedded Multi-Media Card (eMMC) standard. Each central ECU 10 and/or regional ECU 20 and the shared storage device 100 may generate and transmit packets according to the standard protocol that is adopted.

In some embodiments, referring to FIGS. 2 and 5, the storage controller 300 may include a segment analyzer 310, a segment controller 320, a segment table 330, an address translation & control (ATC) request manager 340, and a buffer memory 350.

The segment analyzer 310 analyzes logical block addresses (LBAs) associated with Namespace IDs (NIDs) or Virtual Function IDs (VFIDs) within each nonvolatile memory device 400 to determine whether the LBAS or VFIDs correspond to a normal region where general user data is stored or a code region where code is stored. When the central ECU0 10 requests at least one code segment included in code data (e.g., the code data Function 1 of FIG. 4), the storage controller 300 reads the requested code segment (e.g., any one of the code segments Z11, Z12, and Z13 of FIG. 4) from a corresponding nonvolatile memory device 400. The storage controller 300 may use an overlay method during runtime, in consideration the size of the code data or memory optimization, when reading the requested code segment from the nonvolatile memory device 400. For example, each central ECU 10 and/or regional ECU 20 may create an executable code set where a main code and a requested code segment (e.g., the code segment Z13) are overlaid, by loading the code segment Z13, output from the corresponding nonvolatile memory device 400, into the system memory 201, and then execute the first function. For efficient code segment loading, the storage controller 300 may determine whether a specific region in each nonvolatile memory device 400 where code segments are stored is a code region.

Specifically, the segment analyzer 310 scans for a specific region in each nonvolatile memory device 400 that is written consecutively and is then read only, and considers the specific region as a candidate code region where a plurality of code segments are located. The shared storage device 100 stores one entire code executed to perform a function in units of a plurality of code segments. The function may be predetermined. The plurality of code segments are written consecutively in an area within each nonvolatile memory device 400. The area may be predetermined. Then, when loading the plurality of code segments into the system memory device 200, the shared storage device 100 only performs periodic read operations for the area where the plurality of code segments are stored.

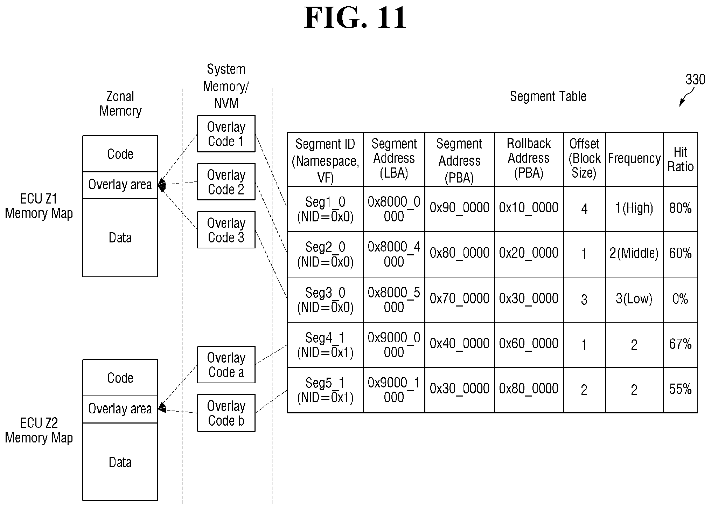

The segment analyzer 310 determines a region where code segments are stored as a code region based on the read access frequency of the region, based on the locality and read access frequency of the region, based on whether data updates have been performed, etc. The segment analyzer 310 monitors characteristic information of code segments stored in a code region and stores address information indicating where the code segments are stored, in the segment table 330 as the characteristic information. In some embodiments, the characteristic information may include, for each code segment, requester information associated with the main code, address information, code segment size information, read access frequency information, hit ratio, etc. For example, the characteristic information may be recorded as shown in FIG. 11 in the segment table 330, to be described in more detail below.

The ATC request manager 340 sends an address translation request to the IOMMU 40 when there exists no physical address that corresponds to the logical address of a particular code segment recorded in the segment table 330 in an address translation cache (ATC) 500. The IOMMU 40 responds to the address translation request, assigning a new physical address to be mapped to the logical address included in the address translation request. Then, the ATC request manager 340 stores the assigned physical address in both the address translation cache 500 and the segment table 330.

The buffer memory 350 stores data used for the operation of the storage controller 300. For example, the buffer memory 350 may temporarily store code data for a software update before transmitting the code data to a nonvolatile memory device 400, or may load data stored in a nonvolatile memory device 400 into the buffer memory 350 and then transmit the loaded data to the system memory 210.

Although not illustrated, in some embodiments, the storage controller 300 may further include a host interface and/or a memory interface. In some embodiments, the storage controller 300 may include an error correction code (ECC) engine and/or an Advanced Encryption Standard (AES) engine. The host interface may serve as an interface for each central ECU 10 and/or each regional ECU 20, and the memory interface may be an interface for each nonvolatile memory device 400.

The shared storage device 100 may further include the address translation cache (ATC) 500. A command transmitted from each central ECU 10 and/or each regional ECU 20 includes a logical address, and may be a command to read, write, or erase data at a physical address in the system memory 210 that correspond to the logical address. The address translation cache 500 stores mapping information between the logical and physical addresses. If there is no physical address corresponding to the logical address included in the command in the address translation cache 500, the storage controller 300 may send an address translation request to the IOMMU 40 before accessing the system memory 210 through direct memory access (DMA).

Referring to FIGS. 2 and 7, the IOMMU 40 performs memory address translation, memory protection, and virtual memory/cache management during access to the data in the system memory device 200. Specifically, the IOMMU 40 may include a translation agent (TA) 41 and an address translation & protection table (ATPT) 42.

The translation agent (TA) 41 may include hardware, firmware, and/or software that translates addresses into physical addresses for PCIe or NVMe transactions. In an embodiment, the storage controller 300 may send an address translation service (ATS) request to the TA 41 through the root complex interface 50. The TA 41 responds to the ATS request by referencing the ATPT 42 and sends back an ATS response through the root complex interface 50.

The address translation & protection table (ATPT) 42 stores address translation information processed by the TA 41 for handling a PCIe and/or NVMe request for an ATS such as a DMA read or write operation.

In some embodiments, the IOMMU 40 may manage the mapping of logical addresses from each central ECU 10 and/or each regional ECU 20 to physical memory pages in the system memory 210 to provide a larger logical address space by extending the physical space of the system memory 210. Each nonvolatile memory device 400 includes regions for different types of memory cells such as a single-level cell (SLC) region, a multi-level cell (MLC) region, and/or a default region for triple-level cells (TLCs) or higher-level cells. Each SLC stores one bit, while each MLC, TLC, or quadruple-level cell (QLC) store two or more bits. The access speed of the storage controller 300 is faster for the SLC region than for the MLC region and may be faster for the MLC region than for the default region. The access speed for the buffer memory 350 within the storage controller 300 may be faster than the access speed for the SLC region.

The storage controller 300, particularly, the segment controller 320 may migrate and store code segments in one of the buffer memory 350, the SLC region, the MLC region, or the default region based on the access frequencies of the code segments, recorded in the segment table 330. Specifically, the segment controller 320 may migrate the storage locations of code segments in each nonvolatile memory device 400 to improve the loading speed of the code segments, based on the access frequencies of the code segments, recorded in the segment table 330. In some embodiments, most frequently and most recently accessed code segments are stored in the buffer memory 350, and the storage locations of code segments are migrated and stored in decreasing order of access frequency to the SLC region, the MLC region, and the default region (for TLCs or higher-level cells), and their previous physical addresses ("Rollback Address (PBA)") and new physical addresses ("Segment Address (PBA)") are recorded together in the segment table 330.

The logical address included in the command transmitted by each central ECU 10 and/or each regional ECU 20 may be translated into a physical address by the TA 41. The physical address may be stored in the address translation cache (ATC) 500 for use in, for example, a DMA read or write operation, by being mapped to the logical address. The storage controller 300 of the shared storage device 100 may check the address translation cache 500 to determine the presence of a physical address in the system memory 210 that corresponds to a logical address included in a read/write command. If there exists the physical address corresponding to the logical address included in the read/write command in the address translation cache 500, the storage controller 300 may access the system memory 210 using the corresponding physical address.

A logical address that has been translated into a physical address may be stored in the address translation cache (ATC) 500. In order to access the system memory 210 in response to a read or write request from each central ECU 10 and/or each regional ECU 20, the storage controller 300 may check the address translation cache 500 to determine the presence of a logical address corresponding to a particular physical address. If the logical address corresponding to the particular physical address exists in the address translation cache 500, the storage controller 300 uses the corresponding logical address for a read operation without the need to send a separate address translation request to the IOMMU 40. If there is no corresponding logical address, an address translation request is sent to the TA 41. In response to the address translation request, the TA 41 assigns a new logical address that can be mapped to the particular physical address. The storage controller 300 stores the assigned logical address in the address translation cache 500.

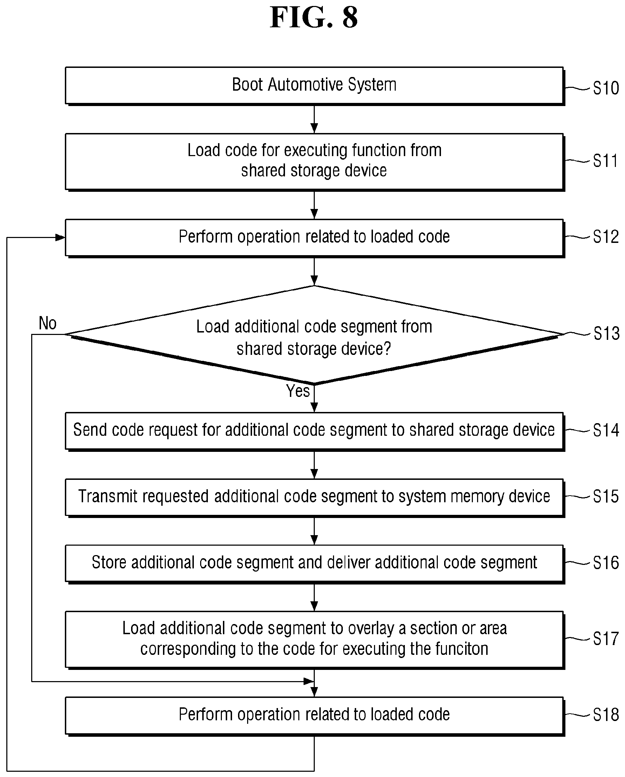

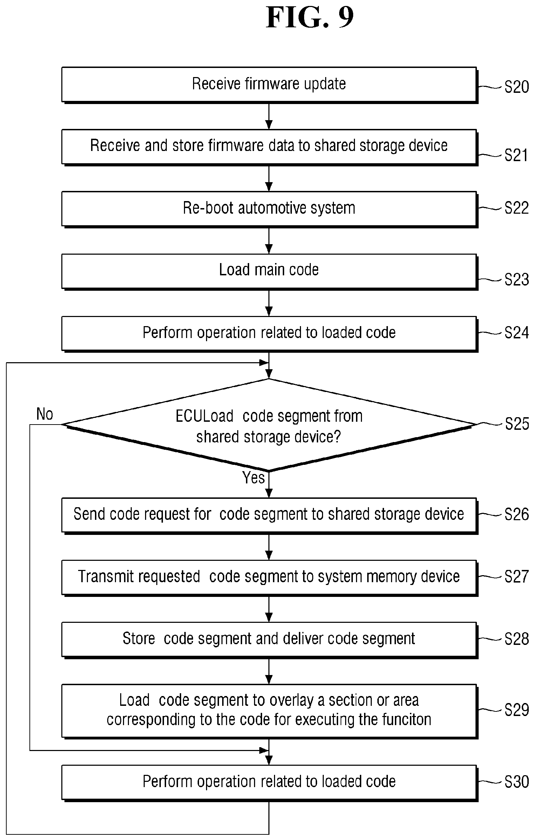

FIGS. 8 and 9 are flowcharts illustrating an operation of the automotive device according to some embodiments.

Referring to FIG. 8, the automotive system boots (S10). For example, the automotive system of the automotive device 1 may boot. In response to system boot of the automotive device 1, a code for executing a particular function may be loaded from the shared storage device 100 (S11). For example, a central ECU 10 or a regional ECU 20 may load a main code and/or some code segments associated with the first function from the shared storage device 100. An operation related to the first function may be performed, based on the loaded code (S12). For example, the operation related to the first function may be performed, based on the main code which is loaded.

During the execution of the first function, the regional ECU 20 monitors whether to load an additional code segment (S13). For example, the regional ECU 20 may determine whether to load an additional code segment. If it is determined not to load an additional code segment (S13, No), the regional ECU 20 continues to perform the operation based on the loaded code (S18).

Conversely, if it is determined to load an additional code segment (operation S13, Yes), a code request for the additional code segment is sent to the shared storage device 100. For example, the central ECU 10 or the regional ECU 20 may send the code request for the additional code segment to the shared storage device 100 (S14).

In response to receipt of the code request, the shared storage device 100 verifies request information. For example, the code request may include request information such as requester information on the regional ECU 20 that has sent the code request, main code information, address information of a requested code segment corresponding to the code request, and/or size information of the requested code segment. The storage controller 300 identifies characteristic information of the requested additional code segment, via the segment analyzer 310, based on the request information, and stores the characteristic information in the segment table 330. For example, the characteristic information may include at least one of the requester information, the main code information, the logical/physical address of the requested code segment, access frequency to a nonvolatile memory device 400 for the requested code segment, or the size of the requested code segment.

The requested additional code segment may be transmitted to the system memory device 200 (S15). For example, the shared storage device 100 may transmit the requested additional code segment to the system memory device 200. The additional code segment may be stored and delivered (S16). For example, the system memory device 200 may store the additional code segment and deliver the additional code segment received from the shared storage device 100 to the regional ECU 20. The received additional code segment may be loaded to an overlay section by the regional ECU 20 (S17). The overlay section may correspond to the code which requests the additional code. In some embodiments, the code which requests the additional code may be the main code. For example, the regional ECU 20 may load the received additional code segment into an overlay section or area corresponding to the code that was loaded in operation S11. The operation based on the additional loaded code segment may be performed (S18).

The automotive device 1 may undergo firmware updates periodically or nonperiodically through external control (e.g., via an OTA update or via a network). When a firmware update occurs, the automotive device 1 may require a comprehensive code update for both the central ECU 10 and the regional ECUs 20, or a code update only for at least one of the regional ECUs 20 for a specific function. In some embodiments, a comprehensive code update may be requested by the central ECU 10, and code segments may be loaded into both the central ECU 10 and the regional ECUs 20. Alternatively, a comprehensive update may be requested by the regional ECUs 20, and code segments may be loaded into each of the regional ECUs 20. It will hereinafter be described how to perform a code update for one of the regional ECUs 20 during a firmware update through external control with reference to FIG. 9.

Referring to FIG. 9, a firmware update may be received (S20). For example, an OTA master device may initiate the firmware update for a regional ECU 20. The updated firmware data may be received and stored into the shared storage device 100 (S21). For example, the automotive device 1 may receive the updated firmware data via an OTA update and store the updated firmware data to the shared storage device 100 via the OTA update. Once the reception of the updated firmware data is complete, the automotive system may be re-booted (S22). For example, the automotive device 1 may reboot. A main code may be loaded from the shared storage device 100 (S23). For example, the regional ECU 20 loads a main code stored in the shared storage device 100 (i.e., that has been updated). In some embodiments, the regional ECU 20 may further load some code segments along with the main code.

Steps S24 through S30 are similar to steps S12 through S18 of FIG. 8. For example, the regional ECU 20 may perform an operation associated with the loaded main code, based on the loaded main code (S24). During the operation, the regional ECU 20 may determine whether to load a code segment (S25). The code segment may be a code segment that was newly added as part of the firmware update or may be a replacement code segment for an existing code segment. If it is determined not to load the code segment (operation S25, No)), the regional ECU 20 continues to perform the operation based on the loaded main code and/or code segments (S30).

Conversely, if it is determined to load the code segment (operation S25, Yes), the regional ECU 20 may send a code request for the code segment to the shared storage device 100 (S26). The shared storage device 100 then may transmit the requested code segment corresponding to the code request to the system memory device 200 (S27), and the system memory device 200 may store the code segment and may deliver the code segment received from the shared storage device 100 to the regional ECU 20 (S28). Then, the received code segment may be newly added as part of the firmware update or may be the replacement code segment for an existing code segment.

The regional ECU 20 may load the received code segment into an overlay area corresponding to the loaded main code (S29) and may perform the operation based on the loaded code segment (S30). The processes illustrated in FIG. 8 and/or FIG. 9 may be performed for each regional ECU 20.

A code request and a code segment loading for each regional ECU 20 have been described so far with reference to FIGS. 8 and 9, but the embodiments of FIGS. 8 and 9 may also be directly applicable to a code request and a code segment loading for the central ECU 10.

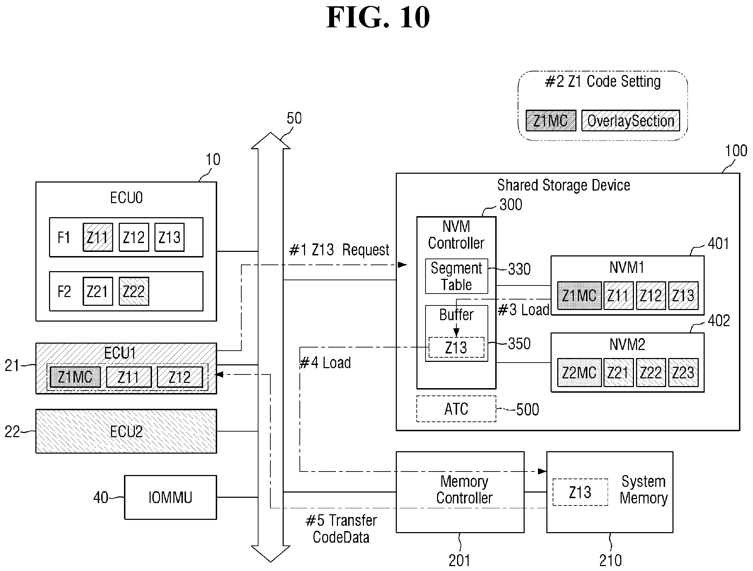

FIG. 10 is a block diagram for explaining the operation of the automotive device according to some embodiments.

Referring to FIG. 10, after a system boot, a regional ECU 21 reads a main code and code segments that are either currently in need or soon to be executed, from the shared storage device 100 through the system memory device 200 and stores the read main code and code segments as an executable code set (as in operations S11 and S12 of FIG. 8 or operations S23 and S24 of FIG. 9). The regional ECU 21 commences an operation for a first function F1 based on the initial executable code set. Thereafter, if additional code segments are to be loaded during the operation (as in operation S13 of FIG. 8 or operation S25 of FIG. 9), the regional ECU 21 sends a code request for the first function F1 to the shared storage device 100 (e.g., #1 - Z13 Request). The code request may be the code request sent in operation S14 of FIG. 8 or operation S26 of FIG. 9.

In response to receipt of the code request, the storage controller 300 verifies request information included in the code request. The request information may include, for example, requester information on a requester device that has sent the code request, information on a main code, address information of a requested code segment corresponding to the code request, and/or the size of the requested code segment. The storage controller 300 stores characteristic information of the requested code segment that corresponds to the request information in the segment table 330.

The storage controller 300 sets an executable code set including main code information and stores the executable code set in the segment table 330 as characteristic information. The executable code set, which is a data bundle run by the regional ECU 21 for executing the first function F1, includes main code information Z1MC and an overlay section (#2 - Z1 Code Setting). The main code information Z1MC may include header information for the entire main code. The overlay section may contain one or more code segments corresponding to the main code information Z1MC, including current and subsequent code segments.

If the main code and the relevant code segments are all transmitted together to a regional ECU whenever a code update is conducted as in the related art, the size of a zonal memory (see FIG. 6) of the regional ECU needs to be increased, and the burden of code loading may increase because of a large size of the entire code. Moreover, the transmission of the entire code may lower operational efficiency, considering trends for the implementation of a variety of functionalities in the automotive device and the operation of the regional ECU in combination with other ECUs (e.g., the central ECU and other of the regional ECUs). Therefore, in an embodiment, upon system boot of the automotive device 1, the central ECU 10 and the regional ECUs 21 and 22 may load and execute an executable code set from the shared storage device 100 and the system memory device 200. Then, during an operation, the central ECU 10 and/or the regional ECUs 21 and 22 may newly read only code segments from the shared storage device 100 and the system memory device 200 to overlay the newly read code segments onto the overlay section of the executing code set, thereby enhancing both loading speed and operational efficiency.

The storage controller 300 reads at least one code segment (e.g., the code segment Z13 in the embodiment illustrated in FIG. 10) corresponding to the main code information Z1MC according to the code request and stores the read code segment in the buffer 350 (#3 - Load). Specifically, the segment controller 320 reads the code segment Z13 corresponding to a physical address in a nonvolatile memory device 401 with reference to the segment table 330 and loads the read code segment Z13 into the buffer memory 350.

The storage controller 300 loads the code segment Z13, previously stored in the buffer memory 350, into the system memory 210 via the system memory controller 201 (#4 - Load). The system memory controller 201 then delivers the loaded code segment Z13 to the requester, i.e., the regional ECU 21 (#5 - Transfer CodeData). The regional ECU 21 stores the received code segment Z13 in its zonal memory 25, and the zonal processor 24 of the regional ECU 21 continues to perform the first function F1 by loading (or overlaying) the stored code segment Z13 into the overlay section of a transfer code set Z1 that has been stored during the operation.

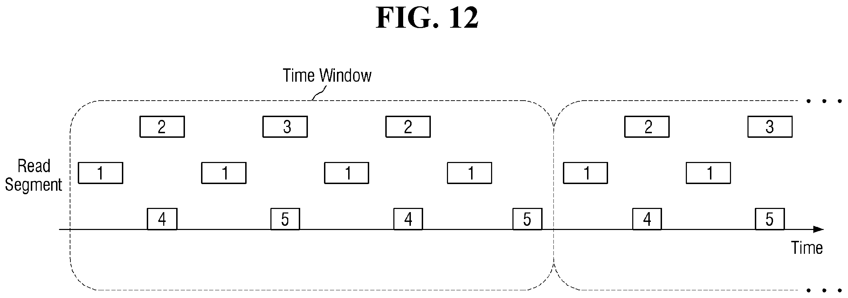

FIG. 11 illustrates a segment table according to some embodiments, and FIG. 12 is a schematic view for explaining an access frequency of code segments according to some embodiments.

Referring to FIG. 11, the regional ECUs 21 and 22 may load only code segments that are currently in need or soon to be executed for the first and second functions F1 and F2, into their zonal memories 25 from a nonvolatile memory device 400 through the system memory 210 due to the limited size of their zonal memories 25.

To this end, the segment table 330 stores characteristic information of code segments to facilitate rapid code segment loading from the nonvolatile memory device 400. The characteristic information includes a segment ID, which contains requester information (e.g., whichever of the central ECU 10 and the regional ECUs 20 have requested a code segment), a requested logical address (LBA), a current physical address (or physical segment address) (PBA) mapped to the requested logical address, the previous physical address (or rollback address (PBA)) for the segment ID, the block size of the requested code segment, the access frequency (frequency) of the requested code segment, and access information (e.g., a Hit Ratio) for applying the Least Recently Used (LRU) algorithm.

Specifically, the nonvolatile memory device 400 divides and stores an entire code for executing at least one function into a plurality of code segments based on the respective physical/functional characteristics of the plurality of code segments. For example, for a code overlay operation in the central ECU 10 and the regional ECUs 21 and 22, the storage controller 300 analyzes and verifies the characteristic information, through the segment analyzer 310, when storing the plurality of code segments, and stores the characteristic information in the segment table 330. The segment controller 320 may load the requested code segment from the nonvolatile memory device 400 in units of pages or blocks based on the characteristic information and may transmit the loaded code segment to the system memory device 200.

In response to receipt of a code request, the segment controller 320 verifies whether the code request originates from the same requester or ECU based on the segment IDs (e.g., Process Address Space IDs (PASIDs), requester IDs (RIDs), NIDs or VFIDs of the code segments stored in the buffer memory 350. A requester device that has sent the code request may be selectively identified by not only the NID and VFID, but also a PASID and/or an RID of a target NMVe or PCIe device. For convenience, NIDs and VFIDs will hereinafter be described as being used as requester information, but embodiments are not limited thereto and, in some embodiments, various other IDs may also be used as the requester information.

The segment controller 320 reads a series of code segments having the same NID or VFID as the segment ID from the nonvolatile memory device 400. The segment controller 320 reads the series of code segments referencing the current physical addresses in the nonvolatile memory device that correspond to the logical addresses of the code segments.

For example, as mentioned earlier with reference to FIG. 10, an executable code set stored in the zonal memory 25 of each of the regional ECUs 21 and 22 includes a main code (Code), which is for scheduling and loading code segments, an overlay area (Overlay area), and code-related data (Data).

The main code, which is the main function (e.g., "Z1MC" of FIG. 10) of a function executed in the requester device (e.g., the regional ECU 21), resides in the zonal memory 25 of the regional ECU 21.

For example, it is assumed that the code segments Z11, Z12, and Z13 for the first function F1 performed by the regional ECU 21 correspond to segment IDs Seg1_0, Seg2_0, and Seg3_0, respectively, in FIG. 11. The code segments Z11, Z12, and Z13 may have the same block size or different block sizes. For example, code segment "Overlay Code 1" (Seg1_0) may have a block size of 4, code segment "Overlay Code 2" (Seg2_0) may have a block size of 1, and code segment "Overlay Code 3" (Seg3_0) may have a block size of 3. In this example, the segment controller 320 may identify requester information for the regional ECU 21 and the segment IDs ("Segment ID (Namespace, VF)"), logical addresses ("Segment Address (LBA)"), current physical addresses ("Segment Address (PBA)"), block sizes ("Offset (Block Size)"), frequencies ("Frequency"), and hit ratios ("Hit Ratio") of the code segments corresponding to the first function F1 from the characteristic information in the segment table 330.

The overlay area is where code segments that have the same NID or VFID and are scheduled in the order defined by the segment IDs of the code segments in the segment table 330 are loaded. The overlay area is an area where code segments (hereinafter, the first code segments) currently being loaded in the nonvolatile memory device 400 or soon to be executed are stored. The overlay area is an area where additional code segments (hereinafter, the second code segments) are replaced with or overlaid by the first code segments upon request during runtime. The size of the overlay area may be equal to or slightly greater than the largest block size among all the code segments. In the examples of FIGS. 10 and 11, the size of the overlay area may be equal to or greater than the block size of the code segment "Overlay Code 1", which has the largest block size of 4.

The code-related data includes data for executing functions alongside the first code segments or the second code segments.

In the examples of FIGS. 10 and 11, segment IDs Seg1_0, Seg2_0, and Seg3_0 are mapped to the same NID, i.e., 0×0. NID 0×0 is an ID for the regional ECU 21, while NID 0×1 is an ID for the second ECU 22. If the code segments Z11, Z12, and Z13 are to be loaded in the order of Z11, Z12, and Z13 according to the main code, the segment controller 320 may load the code segments Z11 and Z12, referring to the segment table 330, may load the code segments Z11 and Z12 from the nonvolatile memory device 400 upon system boot and may load the code segment Z13 from the nonvolatile memory device 400 during operation. The code segments Z11, Z12, and Z13 are read from stored physical addresses, i.e., 0×8000_0000, 0×8000_4000, and 0×8000_5000, respectively.

The segment table 330 includes the access frequencies of the code segments Z11, Z12, and Z13. The storage controller 300 may the storage locations of code segments based on their access frequencies recorded in the segment table 330. Access frequency indicates how often each code segment is read within a given period. Referring to FIG. 12, the segment controller 320 counts how many times each code segment is accessed within a unit time window. The storage controller 300 may change the storage locations of code segments to one of the buffer memory 350, the SLC (single level cell) region, the MLC (multi level cell) region, and the TLC (triple level cell) region based on their access frequency levels.

Specifically, referring to FIG. 12, code segments Seg1_0, Seg2_0, Seg3_0, Seg4_1, and Seg5_1 are illustrated as code segments 1, 2, 3, 4, and 5, respectively, for convenience. Code segment 1 is accessed 4 times, code segment 2 is accessed 2 times, and code segment 3 is accessed once. Code segments 4 and 5 are each accessed 2 times.

In some embodiments, the access frequencies of code segments may be measured and recorded as levels. The access frequency of the most frequently accessed code segment, i.e., the code segment Seg1_0, may be recorded as a high level of 1, the access frequency of the least accessed code segment, i.e., the code segment Seg3_0, may be recorded as a low level of 3, and the access frequency of the code segment Seg2_0 may be recorded as a medium level of 2. The access frequency of the code segment Seg4_1 and Seg5_1 also may be recorded as a level of 2.

The storage location of code segments in the nonvolatile memory device 400 may vary from the buffer memory 350 to the SLC region to the MLC region to the default region for TLCs or higher-level cells depending on the access frequency levels of the code segments.

For example, the code segment Seg1_0, which is the most frequently accessed code segment with an access frequency level of 1, may be stored in the buffer memory 350 within the storage controller 300, the code segment Seg2_0 with an access frequency level of 2 may be stored in the SLC region of the nonvolatile memory device 400, and the code segment Seg3_0, which is the least frequently accessed code segment with an access frequency level of 3, may be stored in the default region of the nonvolatile memory device 400.

The segment table 330 may manage the characteristic information of code segments using the LRU method. Since the segment table 330 has a limited size, resources can be optimized by retaining the most recently used information while deleting outdated information.

For example, LRU information, among the characteristic information of code segments, may be hit ratio information. For example, the segment controller 320 may delete code segment information in order of lowest to highest hit ratio. For example, the code segment Seg3_0 with a hit/miss ratio close to 0% may be deleted from the segment table 330 because the code segment Seg3_0 is infrequently accessed upon request.

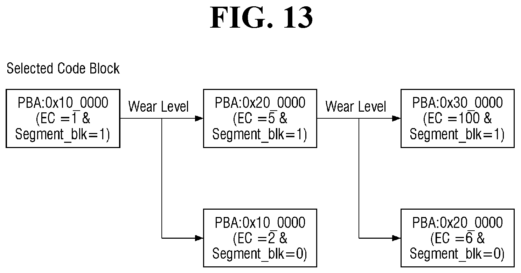

FIG. 13 is a schematic diagram for explaining an inheritance of an addresses of code segments according to some embodiments.

Referencing FIG. 13, from the perspective of a File Transfer Layer (FTL), each nonvolatile memory device 400 may perform wear leveling for lifespan management.

As a result of wear leveling, the physical address of a code segment may change. If the location of a block where the code segment is stored changes due to wear leveling, the storage controller 300 may manage and store both block information ("Segment Address (PBA)") before the change and block information ("Rollback Address (PBA)") after the change together as characteristic information of the code segment. In a rollback block within each nonvolatile memory device 400, original data is retained until an erase operation is performed. Thus, the FTL may assign a random particular block to record the original data along with parity data for integrity and designate the random particular block as a rollback block to prepare for the deletion of the rollback block.

For example, for a particular code segment, the storage controller 300 manages a physical address (e.g., PBA = 0×10_000), lifespan information (e.g., EC = 1), and code block information (e.g., Segment_blk = 1).

The lifespan information is used in relation to the lifespan of a block of each nonvolatile memory device 400 where the particular code segment is stored. Wear leveling ensures that all blocks within each nonvolatile memory device 400 are evenly utilized. A region where code is stored is hardly updated unlike a region storing regular data and thus has a lower erase count (EC). As the difference in EC between the code-storing region and the regular data-storing region increases, a block with a higher or average EC is intentionally found to relocate data.

When wear leveling is conducted, the EC for a previous physical address that has been wear-leveled increases by one. During wear leveling, a block with a highest EC may be selected from among a number of replacement blocks to inherit each wear-leveled block, thereby managing the lifespan of each nonvolatile memory device 400.

The code block information, which is an indicator for whether data stored at each particular physical address is a code block storing a code segment. For example, when a code segment is stored, Segment_blk = 1, and when data other than a code segment is stored, Segment_blk = 0.

In the example of FIG. 13, a code segment stored at PBA: 0×10_0000 is migrated to and inherited by PBA: 0×20_0000, which has a higher EC of 5 (i.e., EC = 5), by a first wear leveling process. As a result of the first wear leveling process, PBA: 0×10_0000 currently with an EC of 1 (i.e., EC=1) increases to an EC of 2 (i.e., EC = 2). Also, as PBA: 0×10_0000 is no longer the current physical address but becomes the previous physical address, the code block information for PBA: 0×10_0000 changes from Segment_blk = 1 to Segment_blk = 0. Then, the previous physical address, i.e., PBA: 0× 10_0000, may be stored in the segment table 330 as a rollback address along the current physical address, i.e., PBA: 0×20_0000, to prepare for any issues that may arise from future wear leveling.

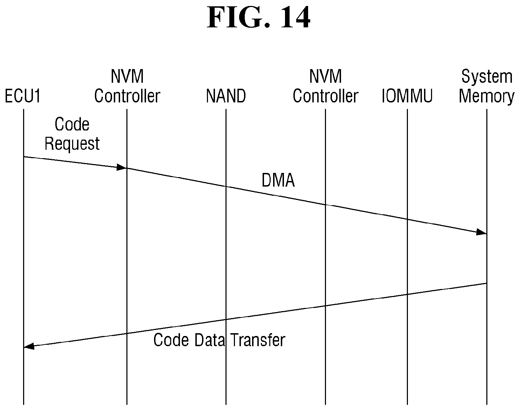

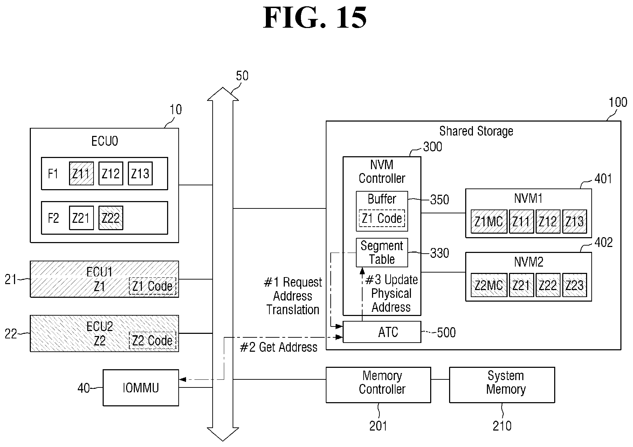

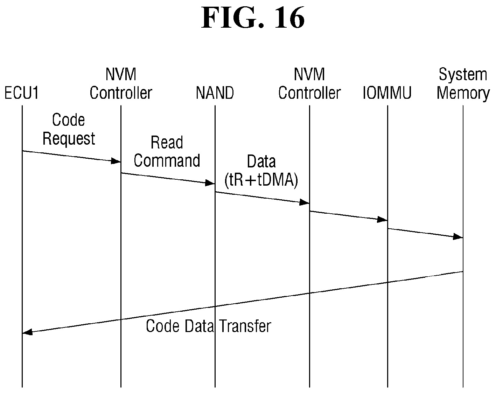

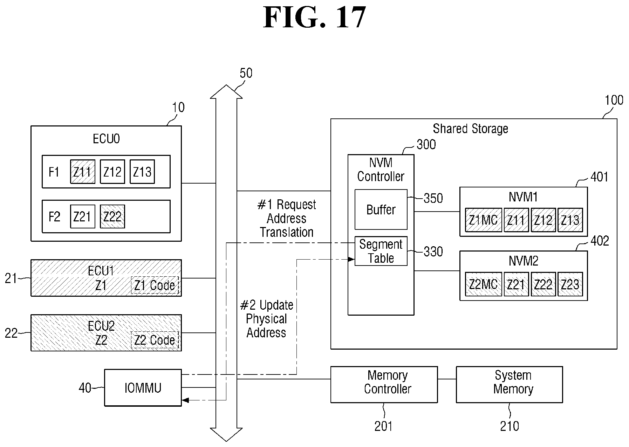

In the example of FIG. 13, a code segment stored at PBA: 0×20_0000 is migrated to and inherited by PBA: 0×30_0000, which has a higher EC of 100 (i.e., EC = 100), by a second wear leveling process. As a result of the second wear leveling process, PBA: 0×20_0000 currently with an EC of 5 (i.e., EC = 5) increases to an EC of 6 (i.e., EC = 6). Moreover, since PBA: 0×20_0000 becomes a rollback address, the code block information for PBA: 0×20_0000 changes from Segment_blk = 1 to Segment_blk = 0. Then, the previous physical address, i.e., PBA: 0×20_0000, may be stored in the segment table 330 as a rollback address along with the current physical address, i.e., PBA: 0×30_0000. Meanwhile, since code segment addresses are physical addresses, mapping with logical addresses included in code requests from requester devices is required. The mapping between logical and physical addresses may operate according to the embodiments depicted in FIGS. 14 and 15 or the embodiments depicted in FIGS. 16 and 17.

FIG. 14 is a flowchart illustrating an operation of the automotive device according to some embodiments, and FIG. 15 is a conceptual diagram illustrating an operation of the automotive device according to some embodiments.

Referring to FIG. 14, if the current physical address of a requested code segment in the system memory 210 is known, the storage controller 300 may be able to quickly access the system memory 210 for the requested code segment ("DMA") and transfer the requested code segment to the zonal memory 25 of a requester device ("Code Data Transfer").

Specifically, referring to FIG. 15, in response to receipt of a code request from a requester device, if there is no physical address corresponding to the code request (i.e., there is no corresponding physical address in the system memory 210 in the segment table 330), the ATC request manager 340 sends an address translation request to the TA 41 (of FIG. 7) of the IOMMU 40 (#1 - Request Address Translation). The TA 41 assigns a physical address corresponding to the address translation request (#2 - Get Address) and transmits the assigned physical address to the ATC request manager 340. The ATC request manager 340 maps the assigned physical address with characteristic information of a requested code segment, stores it in the segment table 330, and stores the assigned physical address in the address translation cache 500 (#3 - Update Physical Address with Logical Address).

Since code segments are stored in each nonvolatile memory device 400 by being classified based on the access frequencies of the code segments and can be accessed based on the physical addresses of the code segments that are mapped in the segment table 330, faster access to the physical addresses of code data in the system memory 210 is enabled based on the information in the segment table 330, without the need to send a physical address assignment request to the TA 41 every time.

FIG. 16 is a flowchart illustrating an operation of the automotive device according to some embodiments of the present disclosure, and FIG. 17 is a conceptual diagram illustrating an operation of the automotive device according to some embodiments.

Referring to FIG. 16, if a logical address corresponding to a code request is unknown, the storage controller 300 may send an address translation request to the TA 41 within the IOMMU 40 to access the system memory 210 with the logical address.

When a requester device (e.g., a regional ECU (ECU1) 20) issues a code request ("Code Request"), the storage controller 300 sends a read command to a nonvolatile memory device 400 ("Read Command"). The nonvolatile memory device 400 reads data from a physical address corresponding to a logical address included in the read command and transmits the read data to the storage controller 300 ("Data (tR+tDMA)"). However, if the physical address corresponding to the code request is unknown, the storage controller 300 sends an address assignment request to the TA 41 within the IOMMU 40, and the TA 41 assigns a new physical address in the system memory 210. Then, the storage controller 300 stores the requested code segment in the system memory 210 at the assigned physical address. The system memory 210 transmits code data stored at the assigned physical address to the requester device that has issued the code request ("Code Data Transfer").

Referring to FIG. 17, in some embodiments, if the address translation cache 500 is not available in the shared storage device 100 or if the address translation cache 500 is not used, the storage controller 300 sends an address translation request directly to the TA 41 within the IOMMU 40 (#1 - Request Address Translation). Then, the TA 41 sends an address translation service response that includes a new physical address corresponding to the address translation request (#2 - Update Physical Address).

The storage controller 300 updates the segment table 330 with the physical address sent by the TA 41 as characteristic information of the corresponding code segment. Then, when reading a subsequent code segment to be overlaid later, the storage controller 300 reads the subsequent code segment based on the characteristic information in the segment table 330.

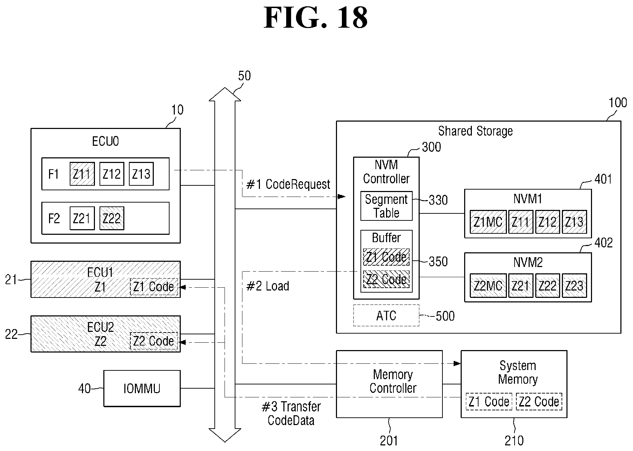

FIG. 18 is a conceptual view explaining the operation of the automotive device according to some embodiments.

Referring to FIG. 18, as described earlier with reference to FIG. 9, when firmware updates for the regional ECUs 21 and 22 are conducted, the central ECU 10 outputs code requests for the delivery of updated first and second functions F1 and F2 to the regional ECUs 21 and 22, respectively (#1 - Code Request). For example, the first function F1, which is executed in the regional ECU 21, may include the code segments Z11, Z12, and Z13, and the second function F2, which is a function executed in the regional ECU 22, may include the code segments Z21 and Z22. In some embodiments, contrary to what is illustrated in FIG. 18, the code requests may be sent directly from the regional ECUs 21 and 22 to the shared storage device 100.

The storage controller 300 checks the segment table 330 for requester information included in each of the code requests. The storage controller 300 identifies the requester information (e.g., the NID of the regional ECUs 21 and 22) and code regions associated with the requester information, reads sets of multiple code segments corresponding to the code requests from the identified code regions (e.g., a code region 401), and stores the sets of code segments in the buffer memory 350.

The storage controller 300 reads sets of main code-related code segments from nonvolatile memory devices 401 and 402 into the system memory 210 (#2 - Load), and transfers requested code segments from among the sets of code segments stored in the system memory 210 to the zonal memories 25 of the regional ECUs 21 and 22 (#3 - Transfer CodeData). The regional ECUs 21 and 22 overlay the code segments stored in their zonal memories 25 onto the overlay areas of transfer code sets and continue to execute the first and second functions F1 and F2, respectively.

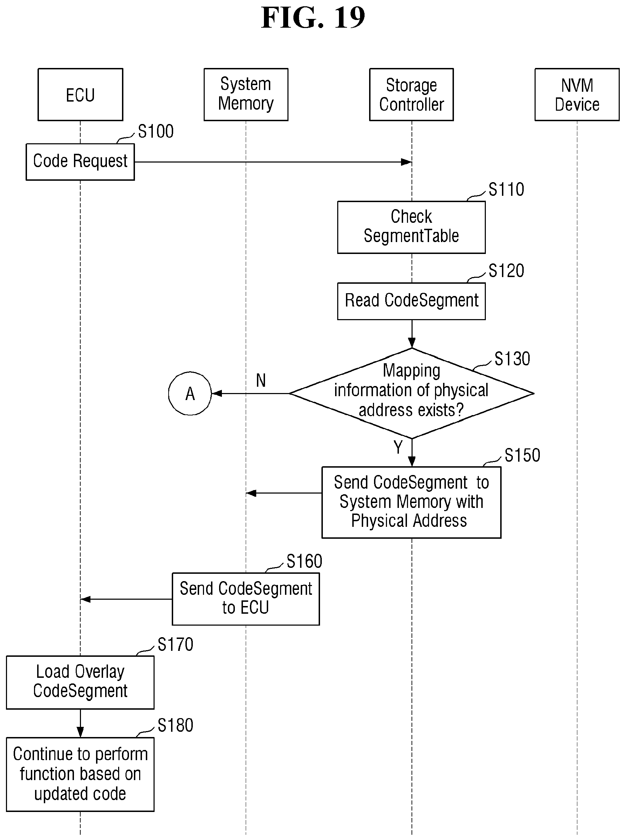

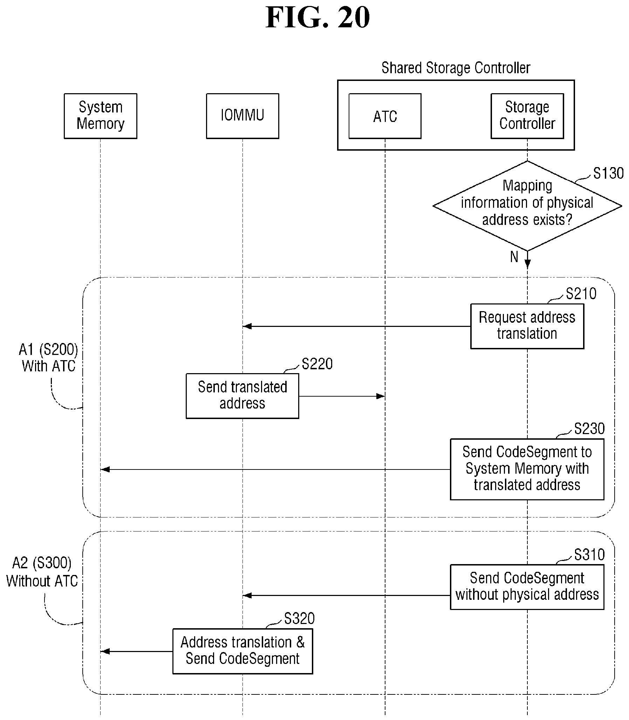

FIG. 19 is a flowchart illustrating an operation of the automotive device according to some embodiments of the present disclosure, and FIG. 20 is a flowchart illustrating an operation of the automotive device according to some embodiments. It should be noted that, in FIG. 20, A1 illustrates an operation S200 when the shared storage device 100 includes the ATC 500, and A2 illustrates an operation S300 when the storage controller 300 does not include the ATC 500.

Referring to FIGS. 19 and 20, if a determination is made that an additional code segment is needed during the execution of a code associated with a particular function, an ECU 10 or 20 outputs a code request (S100). The storage controller 300 checks the segment table 330 to identify characteristic information corresponding to the code request from the segment table 330 (S110). Specifically, the storage controller 300 identifies a code region and an address in a nonvolatile memory device 400 from the characteristic information stored in the segment table 330. The storage controller 300 reads at least one code segment corresponding to the code request (S120).

Thereafter, the storage controller 300 determines whether there exists mapping information of a physical address corresponding to a requested logical address in connection with the read code segment (S130). Then, if there exists such mapping information (S130, Y), the storage controller 300 may send the read code segment to the corresponding physical address in the system memory 210 (S150). The system memory 210 sends the code segment to the ECU 10 or 20 (S160), and the ECU 10 or 20 stores the code segment in its zonal memory 25 and overlays the code segment (S170), thereby updating an existing executable code set. The ECU 10 or 20 continues to perform the particular function based on the updated executable code set (S180).

Conversely, if there is no such mapping information (S130, N), address translation may be performed as illustrated in FIG. 20.

Specifically, referring to FIG. 20, if the shared storage device 100 includes the address translation cache 500, operation S200 is executed. The storage controller 300 sends an address translation request to the TA 41 of the IOMMU 40 (S210), and the TA 41 of the IOMMU 40 assigns a new physical address based on the ATPT 42 and sends an address translation service response to the address translation cache 500 (S220). The segment controller 320 receives the new physical address from the address translation cache 500 and transmits a requested code segment to the new physical address within the system memory 210.

Alternatively, if the shared storage device 100 does not include the address translation cache 500, operation S300 is executed. The storage controller 300 sends the requested code segment to the IOMMU 40 without a physical address corresponding to the logical address of the requested code segment (S310), and the TA 41 of the IOMMU 40 assigns a new physical address based on the ATPT 42 and transmits the requested code segment to the new physical address within the system memory 210 (S320).

According to the aforementioned embodiments, even if a code for executing a particular function or a new function continues to be updated and stored in the shared storage device 100, the automotive device 1 can quickly load the updated code into the system memory 210 using code segment information stored in the storage controller 300. Furthermore, by loading only code segments, which are portions of the entire code, into the system memory 210, the automotive device 1 can efficiently utilize the limited resources of the system memory 210.

## Claims

1. An automotive device (1) comprising:
an electronic control unit, ECU (20, 21), configured to send a code request;
a shared storage device (100) including a nonvolatile memory device (400, 401) and a storage controller (300), the nonvolatile memory device (400, 401) configured to store a plurality of code segments that form an entire code corresponding to the code request, and the storage controller (300) configured to load at least one code segment (Z13) of the plurality of code segments from the nonvolatile memory device (400, 401) into a buffer memory (350) based on characteristic information of each of the plurality of code segments; and
a system memory device (200, 210) including a volatile memory and configured to receive the at least one code segment (Z13) from the buffer memory (350) and store the at least one code segment (Z13), and to output the at least one code segment (Z13) to the ECU (20, 21) that has sent the code request,
wherein the ECU (20,21) receives the at least one code segment (Z13) from the system memory device (200, 210) and overlays the at least one code segment (Z13) onto an executable code set and executes a function based on the executable code set.

2. The automotive device (1) of claim 1, wherein the shared storage device (100) includes a segment table (330) that includes the characteristic information, and
wherein the characteristic information includes, for each of the plurality of code segments, requester information for the ECU (20), a logical address, a current physical address, size information, access frequency information, and a hit ratio.

3. The automotive device (1) of claim 2, wherein the characteristic information further includes a previous physical address of each of the plurality of code segments along with the current physical address.

4. The automotive device (1) of claim 3, wherein the storage controller (300) reads the at least one code segment (Z13) based on the previous physical address in the nonvolatile memory device (400) when a code segment corresponding to a requested logical address corresponding to the code request is unable to be read from the current physical address in the nonvolatile memory device (400).

5. The automotive device (1) of claim 2, wherein the segment table (330) selectively deletes the characteristic information of the at least one code segment (Z13) based on the hit ratio of each of the plurality of code segments.

6. The automotive device (1) of claim 1, wherein the storage controller (300) comprises:
a segment analyzer (310) that is configured to determine a code region based on a locality, a read access frequency, and an update status of the nonvolatile memory device (400) and to extract the characteristic information of each of the plurality of code segments stored in the code region,
a segment table (330), which stores the characteristic information for each of the plurality of code segments that has been extracted,
a segment controller (320) that is configured to read the at least one code segment (Z13) corresponding to the code request from the code region of the nonvolatile memory device (400) based on the characteristic information and output the at least one code segment (Z13), and
the buffer memory (350) configured to store the at least one code segment (Z13) that has been read and output the at least one code segment (Z13) to the system memory device (200).

7. The automotive device (1) of claim 6, wherein the segment analyzer (310) is configured to store or migrate the plurality of code segments to one of the buffer memory (350), a single-level cell, SLC, region, a multi-level cell, MLC, region, or a default region within the nonvolatile memory device (400) based on the read access frequency of each of the plurality of code segments.

8. The automotive device (1) of claim 1, further comprising a translation agent, TA,
wherein when there is no physical address of the at least one code segment (Z13) requested by the code request, the shared storage device (100) receives a newly assigned physical address for a logical address included in the code request from the TA (41), and transmits the at least one code segment (Z13) to the newly assigned physical address in the system memory device (200).

9. The automotive device (1) of claim 8, wherein the shared storage device (100) maps the newly assigned physical address with the logical address and updates the characteristic information of the at least one code segment (Z13) corresponding to the code request.

## Patentansprüche

1. Kraftfahrzeugvorrichtung (1), aufweisend:
eine elektronische Steuereinheit (ECU) (20, 21), die zum Senden einer Codeanforderung konfiguriert ist;
eine gemeinsam genutzte Speichervorrichtung (100) mit einer nichtflüchtigen Speichervorrichtung (400, 401) und einem Speicher-Controller (300), wobei die nichtflüchtige Speichervorrichtung (400, 401) so konfiguriert ist, dass sie eine Vielzahl von Codesegmenten speichert, die einen der Codeanforderung entsprechenden vollständigen Code bilden, und der Speicher-Controller (300) so konfiguriert ist, dass er mindestens ein Codesegment (Z13) von der Vielzahl von Codesegmenten auf der Grundlage von Merkmalsinformationen von jedem von der Vielzahl von Codesegmenten aus der nichtflüchtigen Speichervorrichtung (400, 401) in einen Pufferspeicher (350) lädt; und
eine Systemspeichervorrichtung (200, 210) mit einem flüchtigen Speicher, die so konfiguriert ist, dass sie das mindestens eine Codesegment (Z13) aus dem Pufferspeicher (350) empfängt und das mindestens eine Codesegment (Z13) speichert sowie das mindestens eine Codesegment (Z13) an die ECU (20, 21) ausgibt, die die Codeanforderung gesendet hat,
wobei die ECU (20, 21) das mindestens eine Codesegment (Z13) von der Systemspeichervorrichtung (200, 210) empfängt und einen ausführbaren Codesatz mit dem mindestens einen Codesegment (Z13) überlagert und eine Funktion auf der Grundlage des ausführbaren Codesatzes ausführt.

2. Kraftfahrzeugvorrichtung (1) nach Anspruch 1, wobei die gemeinsam genutzte Speichervorrichtung (100) eine Segmenttabelle (330) umfasst, die die Merkmalsinformationen enthält, und
wobei die Merkmalsinformationen für jedes von der Vielzahl von Codesegmenten Requester-Informationen für die ECU (20), eine logische Adresse, eine aktuelle physikalische Adresse, Größeninformationen, Informationen zur Zugriffshäufigkeit und eine Trefferquote umfassen.

3. Kraftfahrzeugvorrichtung (1) nach Anspruch 2, wobei die Merkmalsinformationen zusätzlich zu der aktuellen physikalischen Adresse eine vorherige physikalische Adresse von jedem von der Vielzahl von Codesegmenten umfassen.

4. Kraftfahrzeugvorrichtung (1) nach Anspruch 3, wobei der Speicher-Controller (300) das mindestens eine Codesegment (Z13) auf der Grundlage der vorherigen physikalischen Adresse in der nichtflüchtigen Speichervorrichtung (400) liest, wenn ein Codesegment, das einer angeforderten logischen Adresse entsprechend der Codeanforderung entspricht, nicht von der aktuellen physikalischen Adresse in der nichtflüchtigen Speichervorrichtung (400) gelesen werden kann.

5. Kraftfahrzeugvorrichtung (1) nach Anspruch 2, wobei die Segmenttabelle (330) die Merkmalsinformationen von dem mindestens einen Codesegment (Z13) auf der Grundlage der Trefferquote von jedem von der Vielzahl von Codesegmenten selektiv löscht.

6. Kraftfahrzeugvorrichtung (1) nach Anspruch 1, wobei der Speicher-Controller (300) aufweist:
einen Segmentanalysator (310), der so konfiguriert ist, dass er einen Code-Bereich auf der Grundlage einer Lokalität, einer Lesezugriffshäufigkeit und eines Aktualisierungsstatus der nichtflüchtigen Speichervorrichtung (400) bestimmt und die Merkmalsinformationen von jedem von der Vielzahl von in dem Code-Bereich gespeicherten Code-Segmenten extrahiert,
eine Segmenttabelle (330), in der die Merkmalsinformationen für jedes von der Vielzahl von Code-Segmenten, die extrahiert wurden, gespeichert sind,
einen Segmentcontroller (320), der so konfiguriert ist, dass er das der Codeanforderung entsprechende mindestens eine Codesegment (Z13) auf der Grundlage der Merkmalsinformationen aus dem Codebereich der nichtflüchtigen Speichervorrichtung (400) liest und das mindestens eine Codesegment (Z13) ausgibt, und den Pufferspeicher (350), der so konfiguriert ist, dass er das mindestens eine Codesegment (Z13), das gelesen worden ist, speichert und das mindestens eine Codesegment (Z13) an die Systemspeichervorrichtung (200) ausgibt.

7. Kraftfahrzeugvorrichtung (1) nach Anspruch 6, wobei der Segmentanalysator (310) so konfiguriert ist, dass er die Vielzahl von Codesegmenten in einem von dem Pufferspeicher (350), einem Single-Level-Cell- (SLC-) Bereich, einem Multi-Level-Cell-(MLC-) Bereich oder einem Voreinstellungsbereich innerhalb der nichtflüchtigen Speichervorrichtung (400) speichert oder dorthin migriert, basierend auf der Lesezugriffshäufigkeit von jedem von der Vielzahl von Codesegmenten.

8. Kraftfahrzeugvorrichtung (1) nach Anspruch 1, ferner aufweisend einen Translation-Agent (TA),
wobei, wenn keine physikalische Adresse des mindestens einen durch die Codeanforderung angeforderten Codesegments (Z13) vorliegt, die gemeinsam genutzte Speichervorrichtung (100) von dem TA (41) eine neu zugewiesene physikalische Adresse für eine in der Codeanforderung enthaltene logische Adresse empfängt und das mindestens eine Codesegment (Z13) an die neu zugewiesene physikalische Adresse in der Systemspeichervorrichtung (200) überträgt.

9. Kraftfahrzeugvorrichtung (1) nach Anspruch 8, wobei die gemeinsam genutzte Speichervorrichtung (100) die neu zugewiesene physikalische Adresse der logischen Adresse zuordnet und die Merkmalsinformationen des mindestens einen Codesegments (Z13) entsprechend der Codeanforderung aktualisiert.

## Revendications

1. Dispositif automobile (1) comprenant :
une unité de commande électronique (20, 21) configurée pour envoyer une requête de code ;
un dispositif de stockage partagé (100) comprenant un dispositif de mémoire non volatile (400, 401) et un contrôleur de stockage (300), le dispositif de mémoire non volatile (400, 401) étant configuré pour stocker une pluralité de segments de code qui forment un code complet correspondant à la requête de code, et le contrôleur de stockage (300) étant configuré pour charger au moins un segment de code (Z13) de la pluralité de segments de code depuis le dispositif de mémoire non volatile (400, 401) dans une mémoire tampon (350) sur la base d'informations caractéristiques de chacun des segments de code de la pluralité de segments de code ; et
un dispositif de mémoire système (200, 210) comprenant une mémoire volatile et configuré pour recevoir ledit au moins un segment de code (Z13) depuis la mémoire tampon (350) et stocker ledit au moins un segment de code (Z13), et pour délivrer ledit au moins un segment de code (Z13) à l'unité de commande électronique (20, 21) qui a envoyé la requête de code,
dans lequel l'unité de commande électronique (20, 21) reçoit ledit au moins un segment de code (Z13) depuis le dispositif de mémoire système (200, 210), superpose ledit au moins un segment de code (Z13) à un ensemble de code exécutable et exécute une fonction sur la base de l'ensemble de code exécutable.

2. Dispositif automobile (1) selon la revendication 1, dans lequel le dispositif de stockage partagé (100) comprend une table de segments (330) qui comprend les informations caractéristiques, et
dans lequel les informations caractéristiques comprennent, pour chacun des segments de code de la pluralité de segments de code, des informations relatives à l'unité de commande électronique requérante (20), une adresse logique, une adresse physique actuelle, des informations de taille, des informations de fréquence d'accès, et un taux de succès.

3. Dispositif automobile (1) selon la revendication 2, dans lequel les informations caractéristiques comprennent en outre, pour chacun des segments de code de la pluralité de segments de code, une adresse physique précédente conjointement avec l'adresse physique actuelle.

4. Dispositif automobile (1) selon la revendication 3, dans lequel le contrôleur de stockage (300) lit ledit au moins un segment de code (Z13) dans le dispositif de mémoire non volatile (400) en utilisant l'adresse physique précédente lorsqu'un segment de code correspondant à une adresse logique demandée correspondant à la requête de code ne peut pas être lu à partir de l'adresse physique actuelle dans le dispositif de mémoire non volatile (400).

5. Dispositif automobile (1) selon la revendication 2, dans lequel la table de segments (330) supprime sélectivement les informations caractéristiques dudit au moins un segment de code (Z13) en fonction du taux de succès de chacun des segments de code de la pluralité de segments de code.

6. Dispositif automobile (1) selon la revendication 1, dans lequel le contrôleur de stockage (300) comprend :
un analyseur de segments (310) qui est configuré pour déterminer une région de code sur la base d'une localité, d'une fréquence d'accès en lecture, et d'un état de mise à jour du dispositif de mémoire non volatile (400), et pour extraire les informations caractéristiques de chacun des segments de code de la pluralité de segments de code stockés dans la région de code,
une table de segments (330), qui stocke les informations caractéristiques extraites pour chacun des segments de code de la pluralité de segments de code,
un contrôleur de segments (320) qui est configuré pour lire ledit au moins un segment de code (Z13) correspondant à la requête de code à partir de la région de code du dispositif de mémoire non volatile (400) sur la base des informations caractéristiques et délivrer ledit au moins un segment de code (Z13), et
la mémoire tampon (350), configurée pour stocker ledit au moins un segment de code (Z13) qui a été lu et délivrer ledit au moins un segment de code (Z13) au dispositif de mémoire système (200).

7. Dispositif automobile (1) selon la revendication 6, dans lequel l'analyseur de segments (310) est configuré pour stocker ou migrer les segments de code de la pluralité de segments de code vers l'un des éléments suivants : la mémoire tampon (350), une région de cellules binaires, une région de cellules multiniveaux, ou une région par défaut au sein du dispositif de mémoire non volatile (400), en fonction de la fréquence d'accès en lecture de chacun des segments de code de la pluralité de segments de code.

8. Dispositif automobile (1) selon la revendication 1, comprenant en outre un agent de traduction,
dans lequel, lorsqu'il n'existe pas d'adresse physique pour ledit au moins un segment de code (Z13) demandé par la requête de code, le dispositif de stockage partagé (100) reçoit, de l'agent de traduction (41), une adresse physique nouvellement attribuée pour une adresse logique incluse dans la requête de code, et transmet ledit au moins un segment de code (Z13) à l'adresse physique nouvellement attribuée dans le dispositif de mémoire système (200).

9. Dispositif automobile (1) selon la revendication 8, dans lequel le dispositif de stockage partagé (100) met en correspondance l'adresse physique nouvellement attribuée avec l'adresse logique et met à jour les informations caractéristiques dudit au moins un segment de code (Z13) correspondant à la requête de code.
